# EUROPÄISCHE PATENTSCHRIFT

(11) **EP 0 847 106 B1**
(45) Veröffentlichungstag und Bekanntmachung des Hinweises auf die Patenterteilung: **19.09.2001**
(21) Anmeldenummer: 97121398.8
(22) Anmeldetag: 05.12.1997
(51) Int. Cl.: H01R 9/24, H04Q 1/14

(54) **Anschluss-, Trenn- oder Schaltleiste**
Terminal block, disconnecting or connecting block
Bornier électrique, plaque à bornes de raccordement ou déconnexion

(30) Priorität: 09.12.1996 DE 19652422
(43) Veröffentlichungstag der Anmeldung: 10.06.1998
(73) Patentinhaber: KRONE GmbH, 14167 Berlin (DE)
(72) Erfinder: Gerke, Dieter, 13509 Berlin (DE); Müller, Manfred, 13156 Berlin (DE); Bülow, Harald, 12161 Berlin (DE); Meurers, Peter, Dipl.-Ing., 13467 Berlin (DE)

(56) Entgegenhaltungen:
- EP-A- 0 446 572
- DE-A- 2 804 478
- DE-U- 8 116 614
- DE-U- 9 400 303
- US-A- 3 199 068

## Beschreibung

Die Erfindung bezieht sich auf eine Anschluß-, Trenn- oder Schaltleiste gemäß dem Oberbegriff des Anspruches 1.

Die in der Telekommunikations- und Datentechnik verwendeten Anschluß- und Trennleisten sind entsprechend der DE 28 04 478 C2 mit Schneid-Klemm-Kontakten bestückt und erlauben die Beschaltung in einer Ebene. Die Anschaltkontakte auf der Kabelader- und der Schaltseite sind in gleicher Arbeitshöhe frontseitig angeordnet. Die Leisten sind auf Montagebügel aufgerastet und können bei Bedarf wieder vom Montagebügel mit einem Anlegewerkzeug gelöst und entnommen werden. Einen solchen Montagebügel beschreibt auch die DE 28 11 812 C2.

Mit diesen Leisten können zum Beispiel standardisierte Kabelverzweiger mit zwölf Endverschlüssen zu je 100 DA aufgebaut werden. Eine Erweiterung ist nur durch den Einsatz weiterer Endverschlüsse in einem neuen Gehäuse möglich. Die weitere Verdichtung der Beschaltung im vorgegebenen Raum eines Kabelverzweigers erfordert eine Miniaturisierung der verwendeten Module zu Lasten der verfügbaren Fläche pro Kontaktschlitz im Rangierbereich und bedeutet damit eine Verschlechterung der Arbeitsbedingungen des Monteurs sowie eine Beeinträchtigung der Übersichtlichkeit der Beschaltung.

Die auch zunehmend wichtiger und notwendig werdende Abgrenzung von Kompetenzbereichen zwischen dem Netzbetreiber und dem Teilnehmer ist mit den bekannten Modulen der Telekommunikations- und Datentechnik schwer realisierbar.

Aus der EP 0 446 572 ist eine Anschluß-, Trenn oder Schaltleiste für die Telekommuniktions- und Datentechnik der gattungsgemäßen Art vorbekannt. Die Anschluß-, Trenn oder Schaltleiste besteht aus zwei mit Kontaktelementen bestückten Isolierkörpern und mit an einem Isolierkörper angeordneten Befestigungselementen zum Aufrasten auf eine Haltevorrichtung bzw. zur Befestigung auf stangenförmigen Führungsschienen. Anstelle der stangenförmigen Führungsschienen kann auch ein Aufstecken auf Zungen einer Montagewange erfolgen, wobei die Zungen durch Rasteinrichtungen an den beiden Stirnseiten des Leistenkörpers hindurch ragen. Bei der vorbekannten Anschlußleiste ist mindestens ein Leistenkörper mit einer Drehachse versehen und somit aus der Anschlußleiste herausschwenkbar. In einer Ausführungsform ist der erste Leistenkörper aus dem zweiten Leistenkörper um eine Drehachse herausschwenkbar. Dabei können die Schneid-Klemm-Kontaktelemente des Leistenkörpers geringfügig schräg gegenüber den Schneid-Klemm-Kontaktelementen des Leistenkörpers eingestellt werden. Nachteilig hierbei ist, daß zur Verbindung der beiden Schneid-Klemm-Kontaktelemente ein flexibles Metallband als Verbindungselement erforderlich ist, dessen Enden jeweils mit den Schneid-KlemmKontaktelementen verbunden sind. Nachteilig ist ferner die aufwendige Konstruktion des aus dem ersten Leistenkörpers ausschwenkbaren zweiten Leistenkörpers bzw. die aufwendige Konstruktion des gegenüber des zweiten Leistenkörpers verschwenkbaren ersten Leistenkörpers.

Im DE-G 94 00 303.3 wird ein Anschlußmodul beschrieben, bei welchem zwei Reihen von Klemmleisten 90 ° zueinander abgewinkelt angeordnet sind, die es ermöglichen, die lötfreie, abisolierfreie und schraubenlose Schneid-Klemm-Technik auf kleinstem Raum in den Standard-Anschlußdosen der Daten- und Kommunikationstechnik anzuwenden.

Nachteilig ist es, daß nur Anschlüsse realisiert, nicht jedoch auch Trennungen, Umschaltungen sowie Prüfungen und weitere Funktionen vorgenommen werden können.

Der Erfindung liegt die Aufgabe zugrunde, eine Anschluß-, Trenn- oder Schaltleiste der gattungsgemäßen Art zu entwickeln, mit der unterschiedlichste Schaltungs-, Schutz- und Meßaufgaben in der Fernmelde- und Datentechnik auf kleinstem Raum, in erhöhter Beschaltungsdichte zuverlässig und mit hoher Bedienerfreundlichkeit und Übersichtlichkeit gewährleistet sind, wobei die zuverlässige Trennung der Kompetenzbereiche von Netzbetreiber und von Teilnehmer gesichert sein muß.

Die Lösung dieser Aufgabe ergibt sich aus den Merkmalen des Anspruches 1.

Die vorzugsweise 90°-Abwinkelung der zwei Klemmleisten zueinander in Verbindung mit den durchgehend über zwei Ebenen nach der Erfindung ausgeformten und abgewinkelten Schneid-Klemm-Kontaktelementen ermöglichen es, eine universell einsetzbare Leiste für die Telekommunikations- und Datentechnik zu realisieren, mit der Anschluß-, Trenn- und Schaltaufgaben sowie Prüfen, Messen, Schützen und unterbrechungsloses Umschalten möglich sind. Es sind in dem zweigeteilten Isolierkörper nur die Kontakte auszutauschen und die entsprechenden Funktionselemente, wie zum Beispiel Überspannungsschutz-Stecker oder dgl., zu stecken.

Es kann durch das Stecken eines Magazins ein Schutz der jeweiligen Leiste gewährleistet werden, es kann aber auch der Schutz einer einzigen Doppelader realisiert werden.

Es werden eine erhebliche Verkleinerung der Abmessungen der Leiste und gleichzeitig ein wesentlich größeres und übersichtlicheres Rangierfeld erreicht, so daß in einem standardisierten Kabelverzweiger eine 33 % höhere Beschaltungsdichte und gleichzeitig eine um fast 40 % größere verfügbare Fläche pro Kontakt-schlitz im Rangierbereich erzielt werden.

Die Rangierseite ist in der Endstellung der Leiste zum Monteur gerichtet und erlaubt ein bequemes und zuverlässiges sowie optisch übersichtliches Beschalten der Leiste.

Die Beschaltung der Leiste in zwei Ebenen erlaubt es, die Manipulierbarkeit der Beschaltung der unten liegenden Kabeladerseite durch geeignete Maßnahmen, zum Beispiel durch einen plombierbaren Rahmen, zu verhindern.

Die Beschaltung der Leiste in zwei Ebenen erlaubt des weiteren die Trennung der Kompetenzbereiche, nämlich der Netzbetreiberseite (unten liegende Kabeladerseite) und der Teilnehmerseite (oben liegendes Rangierfeld).

Der mit zwei Rastreihen ausgestattete Montagebügel, wobei die Rastöffnungen in den Seitenflächen angeordnet sind, so daß eine glatte Oberkante erhalten bleibt, welche eine Verletzungsgefahr für den Monteur weitgehend ausschaltet, gewährleistet in der ersten Raststellung der Leiste eine bequeme und zuverlässige sowie übersichtliche Beschaltung und in der zweiten Raststellung eine sichere, schwer manipulierbare und nur mit dem Beschaltungswerkzeug lösbare Endstellung der Leiste.

Die Rückseite des Montagebügels weist ein Langloch auf, welches durch einfaches Lockern der Halterung für den Kabelstrang bzw. für den Sperrstopfen deren stufenloses Justieren ermöglicht, so daß mehrere Kabelstränge an der Rückwand des Montagebügels aneinander vorbeilaufen können.

Weitere Ausführungsformen der Erfindung sehen die Befestigung der Leiste auf Profilschienen oder über einen Flansch vor, auf den die Leiste aufgeschraubt wird.

Weitere vorteilhafte Ausgestaltungen der Erfindung ergeben sich aus den Unteransprüchen.

Die Erfindung ist nachfolgend anhand von in den Zeichnungen dargestellten Ausführungsbeispielen einer Anschlußleiste und einer Trenn- und Schaltleiste näher erläutert. Es zeigen:
- Fig. 1: die Vorderansicht einer Leiste, gebildet aus dem zweigeteilten Isolierkörper (Ober- und Unterteil),
- Fig. 2: die Rückansicht der Leiste nach Fig. 1,
- Fig. 3: die Unteransicht der Leiste nach Fig. 1,
- Fig. 4: die Draufsicht auf die Leiste nach Fig. 1,
- Fig. 5: die Schnittdarstellung (Schnitt B-B) der Leiste nach Fig. 1 mit eingelegtem Trenn- bzw. Schaltkontakt,
- Fig. 6: die Draufsicht auf den Trenn- bzw. Schaltkontakt in Fig. 5,
- Fig. 7: die Schnittdarstellung der Leiste nach Fig. 1 mit eingelegtem Anschlußkontakt,
- Fig. 8: die Draufsicht auf den Anschlußkontakt in Fig. 7,
- Fig. 9: die Schnittdarstellung eines Kabelverzweigers mit Einlegewanne, Montagebügel mit Leiste, Staubschutzkappe,
- Fig. 10: die Vorderansicht des Montagebügels und
- Fig. 11: die Seitenansicht des Montagebügels nach Fig. 10.

Die Anschluß-, Trenn- oder Schaltleiste wird vorzugsweise zum Anschließen von kunststoffisolierten Kabeladern und Installationsdrähten beispielsweise in Endverschlüssen zum Aufbau von beispielsweise Kabelverzweigern in Fernmelde-Ortskabelnetzen eingesetzt.

Ein Endverschluß besteht zum Beispiel aus zehn Leisten zu jeweils zehn Doppeladern, einem Montagebügel 9 und einem Bezeichnungsbügel mit Schild (nicht dargestellt), welcher als Adapter zur Korrektur der Beschaltung auf der Kabeladerseite verwendet werden kann.

Die Bauweise der Leisten nach der Erfindung verkleinert das Rastermaß eines Endverschlusses derart, daß in einer Bucht eines Kabelverzweigers anstelle von bisher drei Endverschlüssen nunmehr vier Endverschlüsse einsetzbar sind. Die Packungsdichte der Anschlüsse erhöht sich um 33 %, wobei gleichzeitig eine wesentlich bessere Übersichtlichkeit und mehr Raum für das Rangierfeld gewonnen werden.

Die dem Monteur zur Verfügung stehende Fläche erhöht sich im Rangierbereich pro Kontakt-Schlitz um fast 40 %.

Durch die in zwei Ebenen erfolgende Beschaltung der Leiste, die Kabeladerseite liegt unten und die Rangierfeldseite liegt um 90° gedreht zum Monteur gerichtet oben, kann durch geeignete Maßnahmen, zum Beispiel durch einen plombierbaren Rahmen, die Manipulierbarkeit der Kabeladerseite (Netzbetreiberbereich) herabgesetzt werden. Die Trennung von Netzbetreiberseite und Teilnehmerseite erlaubt eine Trennung der Kompetenzbereiche.

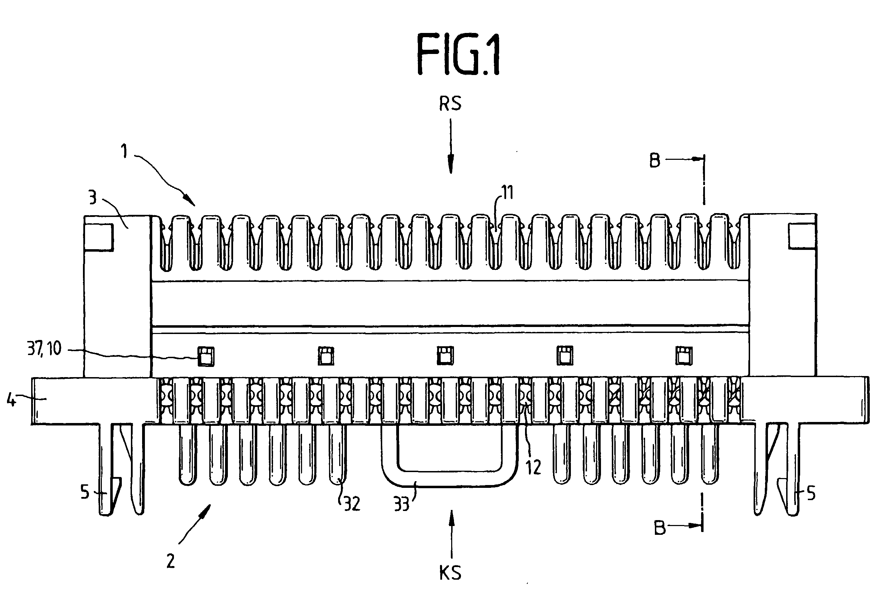

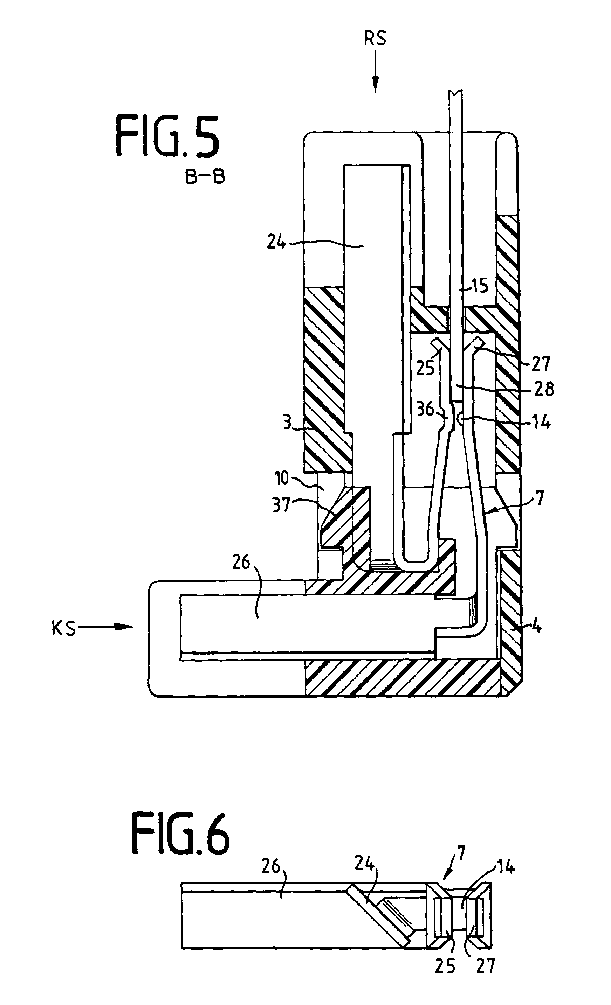

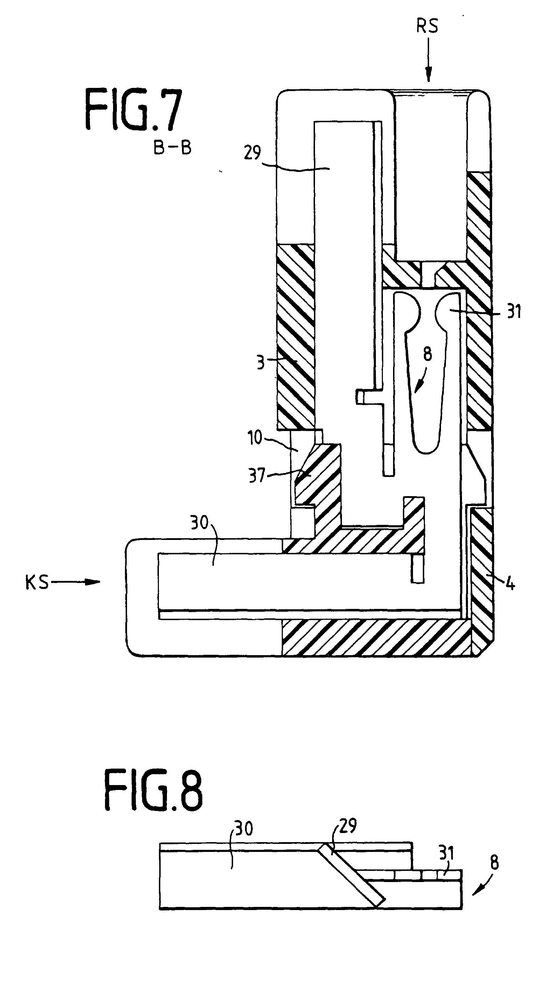

Aus den Darstellungen in den Figuren 1 bis 5 ist der Aufbau der Leiste ersichtlich. Der Isolierkörper der Leiste ist zweigeteilt und besteht entsprechend der Darstellung in den Fig. 1 und 5 aus einem Ober- und einem Unterteil 3,4. Das Oberteil 3 und das Unterteil 4 werden über beidseitig am Leistenoberteil 3 vorgesehene Rastöffnungen 10 und beidseitig am Leistenunterteil 4 vorgesehene Rasthaken 37 nach dem Bestücken mit Schneid-Klemm-Kontakt-Elementen 7,8 (Fig. 6,8) im Winkel von 90° miteinander verrastet.

Der durch das Ober- und das Unterteil 3,4 (Gehäuseteile) gebildete Isolierkörper ist für die Bildung der verschiedenen Leistenfunktionen (Anschluß-, Trenn- oder Schaltleiste) identisch ausgebildet. Die unterschiedlichen Funktionen der Leisten werden ausschließlich durch die Bestückung mit unterschiedlichen Schneid-Klemm-Kontaktelementen nach den Fig. 6 und 8 und durch die Bestückung mit zusätzlichen peripheren Magazinen oder dgl. bewirkt.

Entsprechend der Darstellung in der Fig. 1 weisen die im Oberteil 3 gebildete Klemmleiste 1 Kontaktschlitze 11 und die im Unterteil 4 gebildete Klemmleiste 2 Kontaktschlitze 12 auf, die zueinander im Winkel von 90° stehen und über die jeweils eine Beschaltung erfolgt.

Die Klemmleiste 1 bildet die Rangierseite RS zum Anschluß der abgehenden Adern der Teilnehmerseite und die Klemmleiste 2 bildet die Kabelseite KS zum Anschluß der ankommenden Adern des Netzbetreibers.

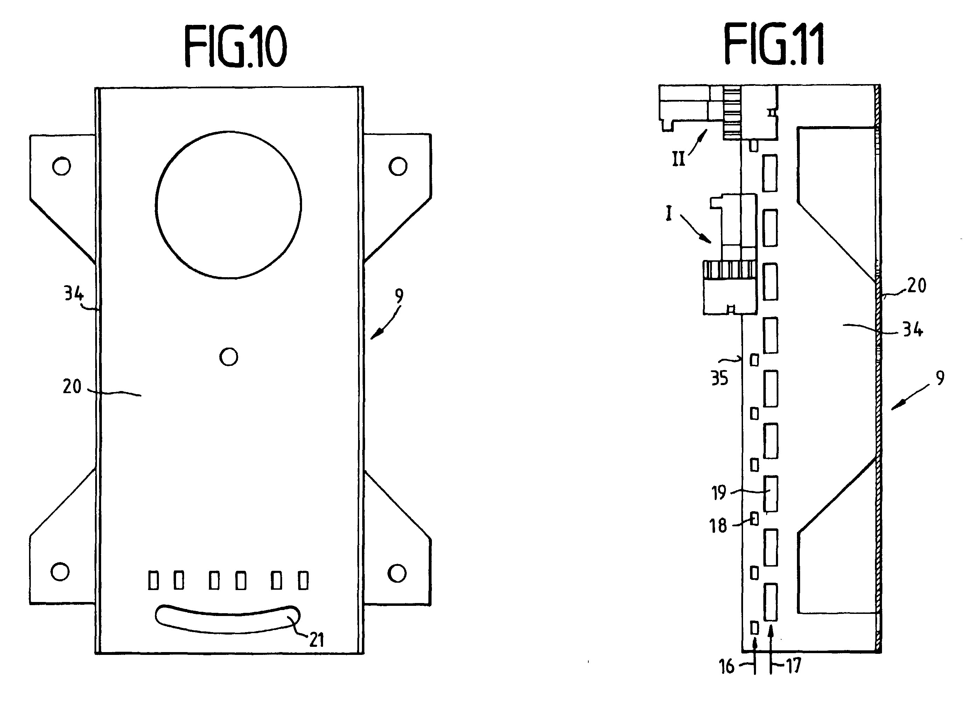

In der Fig. 1 sind des weiteren die bekannten Mittel 32,33 zur Kabeladerführung und die Rastelemente 5 zum Aufrasten der Leiste auf einen Montagebügel 9 (Fig. 10,11) oder auf ein nicht dargestelltes Profil gezeigt. Die Leisten können beliebig aufgereiht werden.

Das einfache Aufrasten der Leisten auf den Montagebügel 9 erspart aufwendige Schraubarbeit und bietet außerdem die Möglichkeit, bei Bedarf einzelne Leisten leicht mit Hilfe einer am nicht dargestellten Beschaltungswerkzeug ausklappbaren Entriegelungsklinge vom Montagebügel 9 zu entriegeln.

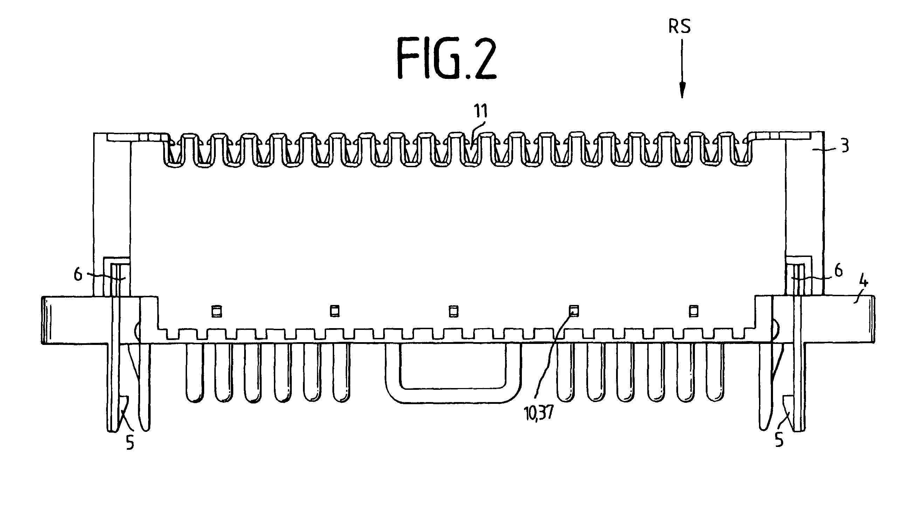

Die Leisten werden entsprechend der Darstellung des Montagebügels 9 in den Fig. 10 und 11 in zwei Positionen an den Montagebügel 9 aufgerastet. In der Fig. 11 sind zwei Rastreihen 16, 17 in den Seitenwänden 34 des Montagebügels 9 gezeigt. Zum bequemen Beschalten der Leiste mit den ankommenden Kabeladern der Kabelseite KS wird die Leiste zunächst in ihre Beschaltungsposition I (Fig. 11) gebracht und dazu mit den Rastelementen 6 (Fig. 2) in die Rastöffnungen 18 der Rastreihe 16 eingerastet. Danach wird die Leiste gelöst und durch eine 90°-Drehung mit den Rastelementen 5 (Fig. 1 bis 4) in die Rastöffnungen 19 der Rastreihe 17 (Fig. 11) in die Endstellung II (Fig. 11) eingerastet. Die Rastung der Leiste in der Endstellung II kann nur durch die Entriegelung der Rastung mit der Entriegelungsklinge gelöst werden, während die Rastung in der Beschaltungsstellung I ohne Hilfsmittel lösbar ist. Es ergibt sich ein optisch übersichtliches und gegenüber dem Stand der Technik wesentlich größeres, dem Monteur zugewandtes Rangierfeld, welches ein zuverlässiges und bequemes Beschalten gewährleistet.

Die Einbringung der Rastöffnungen 18,19 in die Seitenwände 34 des Montagebügels 9 hat den Vorteil, daß die Kanten 35 der Seitenwände 34 glatt sind und keine Verletzungsgefahr bei der Leistenmontage hervorrufen.

Der Montagebügel 9 weist entsprechend der Darstellung in der Fig. 10 ein Langloch 21 zur stufenlosen Justierung der Kabelstränge oder der Sperrstopfen auf, welches ein bequemes Aneinandervorbeirangieren der Kabelstränge an der Rückwand des Montagebügels 9 ohne völliges Lösen der Halterung erlaubt.

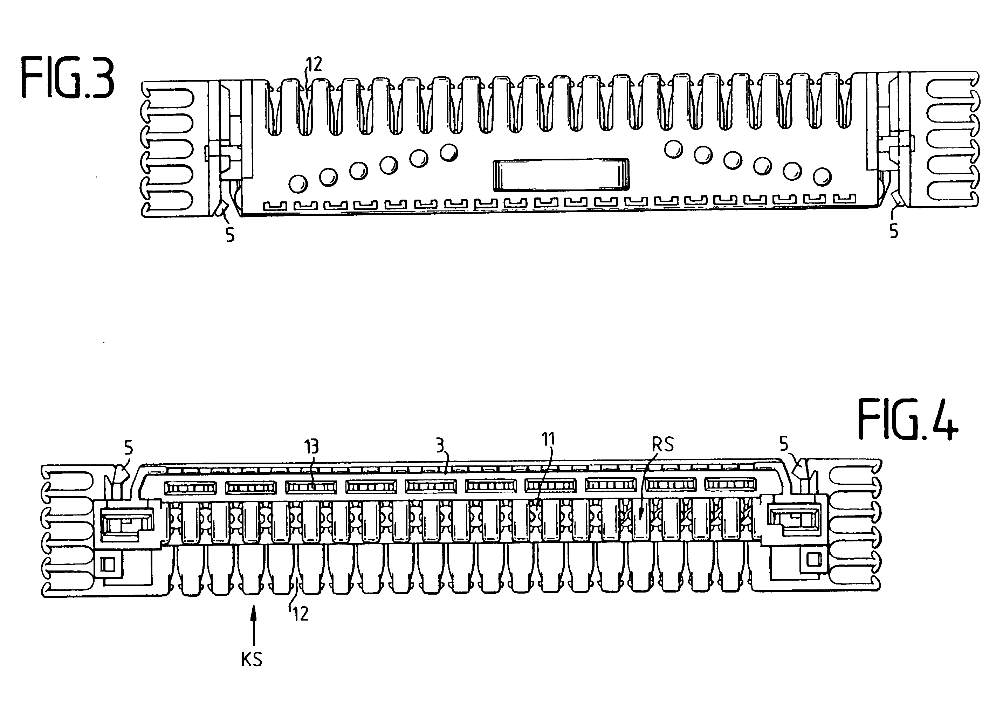

Die Fig. 4 zeigt die Draufsicht auf eine Leiste, wie sie sich dem Monteur darstellt, wenn die Leiste auf den Montagebügel 9 in der Endstellung II eingerastet ist. Die Kontaktschlitze 11 und 13 liegen dem Monteur zugewandt auf der Rangierfeldseite RS und die Kontaktschlitze 12 liegen dazu 90° gedreht auf der Kabelseite KS.

Die Leiste ist entsprechend der Schnittdarstellung in der Fig. 5 durch die Einbringung eines Trennkontakt-Elementes 7 als Trenn- oder Schaltleiste ausgebildet.

Das Trennkontakt-Element 7 nach den Fig. 5 und 6 ist aus einem u-förmigen Schneid-Klemm-Anschlußkontakt 24 mit einem Abgriffkontakt 25 und aus einem L-förmigen Schneid-Klemm-Anschlußkontakt 26 mit einem Abgriffkontakt 27 gebildet. Die beiden Abgriffkontakte 25, 27 bilden in der Ebene der Rangierseite RS einen Funktionsabgriff 28, über den ein Abgriff 15 eines beliebigen, nicht dargestellten Funktionselementes eingeführt wird, um eine gewünschte Funktion zu erfüllen, zum Beispiel ein Überspannungsschutz. Eine Trennstelle 14 kann auch als Schaltstelle ausgebildet sein, indem die Abwinkelung 36 im Abgriffkontaktschenkel 25 entfällt und der Kontaktschenkel 25 gerade weitergeführt ist.

Die abgehenden Kabeladern der Teilnehmer werden an den Schneid-Klemm-Anschlußkontakt 24 angeschaltet, die ankommenden Kabeladern des Netzbetreibers werden an den zum Anschlußkontakt 24 um 90° gedrehten Schneid-Klemm-Anschlußkontakt 26 angeschaltet.

In der Fig. 6 ist das Schneid-Klemm-Kontaktelement 7 (Trennkontakt) in einer Draufsicht dargestellt.

Die Fig. 7 zeigt die Schnittdarstellung einer Leiste, die mit Schneid-Klemm-Anschlußkontakten 8 zu einer Anschlußleiste ausgebildet ist.

Der Schneid-Klemm-Anschlußkontakt 8 ist einstückig aus zwei zueinander in 90°-Abwinkelung angeordneten Schneid-Klemm-Anschlußkontakten 29, 30 und aus einem Funktionsabgriff 31 gebildet.

Der Funktionsabgriff 31 und der Schneid-Klemm-Anschlußkontakt 29 sind von der Rangierseite RS zugänglich, der Schneid-Klemm-Anschluß 30 ist von der Kabelseite KS zu beschalten.

Die Fig. 8 zeigt eine Draufsicht auf den Schneid-Klemm-Anschlußkontakt 8, wie er in der Leiste nach Fig. 7 verwendet ist. Der Schneid-Klemm-Anschlußkontakt 29 ist danach um 45° zum Funktionsabgriff 31 abgewinkelt.

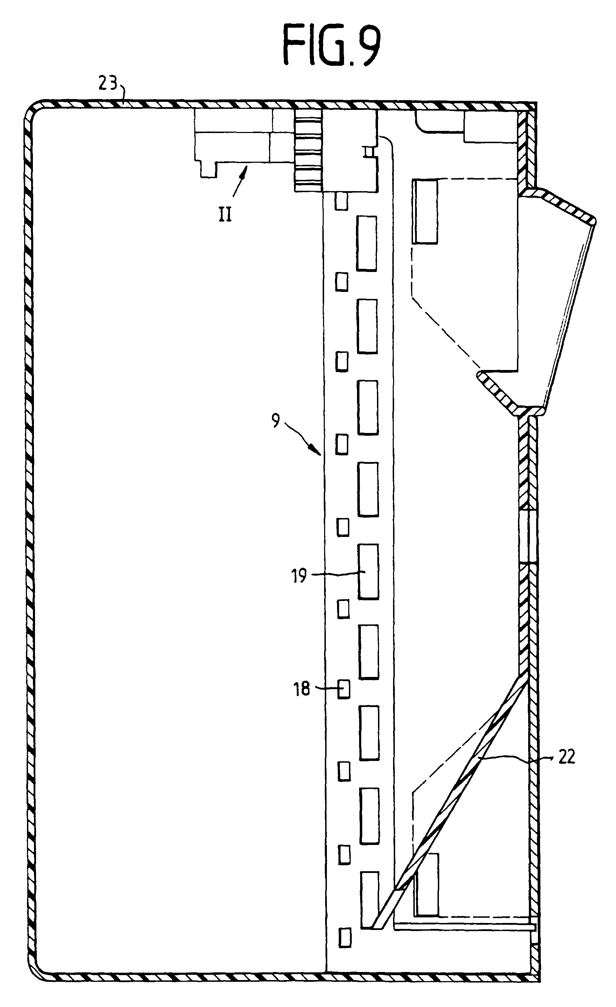

In der Fig. 9 ist in schematischer Schnittdarstellung gezeigt, wie die Kontaktelemente einer auf den Montagebügel 9 aufgerasteten Leiste durch Aufrastung einer Einlegewanne 22 auf den Montagebügel 9 und durch eine Staubschutzkappe 23 vor Verschmutzungen und Kondensatbildung weitgehend geschützt werden.

### BEZUGSZEICHENLISTE

- 1: Klemmleiste
- 2: Klemmleiste
- 3: Oberteil (Isolierkörper)
- 4: Unterteil (Isolierkörper)
- 5: Rastelement
- 6: Rastelement
- 7: Trennkontakt
- 8: Anschlußkontakt
- 9: Montagebügel
- 10: Rastöffnung
- 11: Kontaktschlitz
- 12: Kontaktschlitz
- 13: Kontaktschlitz
- 14: Trennstelle
- 15: Abgriff
- 16: Rastreihe
- 17: Rastreihe
- 18: Rastöffnung
- 19: Rastöffnung
- 20: Rückwand
- 21: Langloch
- 22: Einlegewanne
- 23: Staubschutzkappe
- 24: u-förmiger Kontakt
- 25: Abgriffkontakt
- 26: L-förmiger Kontakt
- 27: Abgriffkontakt
- 28: Funktionsabgriff
- 29: Schneid-Klemm-Anschlußkontakt
- 30: Schneid-Klemm-Anschlußkontakt
- 31: Funktionsabgriff
- 32: Mittel
- 33: Mittel
- 34: Seitenwand
- 35: Kante
- 36: Abwinkelung
- 37: Rasthaken

- RS: Rangierseite
- KS: Kabelseite
- I: Beschaltungsposition
- II: Endposition

## Patentansprüche

1. Anschluß-, Trenn- oder Schaltleiste für die Telekommunikations- und Datentechnik aus zwei mit Kontaktelementen (7,8) bestückten Isolierkörpern (3,4) und mit an einem Isolierkörper angeordneten Befestigungselementen (6) zum Aufrasten auf eine Haltevorrichtung (9),
**dadurch gekennzeichnet,**
**daß** die beiden Isolierkörper (3,4) zueinander abgewinkelt angeordnet und die Kontaktelemente (7,8) über zwei Ebenen ausgeformt und durchgehend in die Isolierkörper (3,4) in zwei Ebenen eingebracht sind, so daß zwei Reihen von zueinander abgewinkelten Klemmleisten (1,2) gebildet werden, und daß an dem einen Isolierkörper weitere Befestigungselemente (5) zum Aufrasten auf die Haltevorrichtung (9) angeordnet sind.

2. Anschluß-,Trenn-oder Schaltleiste nach Anspruch 1, **dadurch gekennzeichnet, daß** in die beiden zueinander abgewinkelt angeordneten Isolierkörper (3,4) über zwei Ebenen ausgeformte, durchgehende oder trennbare Schneid-Klemm-Kontaktelemente (7,8) eingebracht sind, die zwei Reihen von zueinander abgewinkelten Klemmleisten (1,2) bilden, wobei der eine Isolierkörper (4) Rastelemente (5,6) zur Aufrastung auf die Haltevorrichtung in zwei Raststellungen (I,II) aufweist.

3. Anschluß-,Trenn-oder Schaltleiste nach Anspruch 2, **dadurch gekennzeichnet, daß** die Haltevorrichtung (9) durch einen Montagebügel oder eine Profilschiene gebildet ist.

4. Anschluß-,Trenn-oder Schaltleiste nach Anspruch 1, **dadurch gekennzeichnet, daß** die Haltevorrichtung (9) durch einen Flansch gebildet ist, auf den die Leiste aufgeschraubt ist.

5. Anschluß-,Trenn-oder Schaltleiste nach Ansprüchen 1 und 2, **dadurch gekennzeichnet, daß** die beiden Isolierkörper (3,4) in einem Winkel von vorzugsweise 90° miteinander verbunden sind.

6. Trenn- oder Schaltleiste nach den Ansprüchen 1 bis 5, **dadurch gekennzeichnet, daß** die Schneid-Klemm-Kontaktelemente (7) aus einem U-förmigen Schneid-Klemm-Anschlußkontakt (24) mit einem Abgriffkontakt (25) und aus einem L-förmigen Schneid-Klemm-Anschlußkontakt (26) mit einem weiteren Abgriff kontakt (27) gebildet ist, wobei die beiden Abgriffkontakte (25,27) einen Funktions-Abgriff (28) bilden.

7. Anschlußleiste nach den Ansprüchen 1 bis 5, **dadurch gekennzeichnet, daß** die Schneid-Klemm-Kontaktelemente (8) einstückig aus zueinander in 90°-Abwinkelung angeordneten zwei Schneid-Klemm-Anschlußkontakten (29,30) und aus einem Funktions-abgriff (31) gebildet sind.

8. Anschluß-,Trenn-oder Schaltleiste nach Anspruch 3, **gekennzeichnet durch** eine Rastreihe (16) mit Rastöffnungen (18) für die Verrastung der Leiste auf dem Montagebügel (9) in einer Beschaltungsstellung (I) und eine Rastreihe (17) mit Rastöffnungen (19) für die Verrastung der Leiste auf dem Montagebügel (9) in einer Endstellung (II), wobei die Rastöffnungen (18) für die Beschaltungsstellung (I) seitlich versetzt zwischen den Rastöffnungen (19) für die Endstellung (II) der Leiste angeordnet sind.

9. Anschluß-,Trenn-oder Schaltleiste nach Anspruch 3, **dadurch gekennzeichnet, daß** der Montagebügel (9) in seiner Rückwand (20) ein Langloch (21) zur stufenlosen Justierung der Kabelstränge bzw. der Sperrstopfen aufweist.

10. Anschluß-,Trenn-oder Schaltleiste nach Ansprüchen 3, 8, 9, **dadurch gekennzeichnet, daß** der Montagebügel (9) mit einer Einlegewanne (22) und mit einer Staubschutzkappe (23) zur Verhinderung von Verunreinigungen der Kontaktelemente (7,8) verbunden ist.

11. Anschluß-,Trenn-oder Schaltleiste nach Ansprüchen 1 bis 10, **dadurch gekennzeichnet, daß** zur Verhinderung von Manipulationen auf der Kabeladerseite (Netzseite) ein plombierbarer Rahmen vorgesehen ist.

12. Anschluß-,Trenn-oder Schaltleiste nach Anspruch 3, **dadurch gekennzeichnet, daß** auf dem Montagebügel (9) ein als Adapter einsetzbares Bezeichnungsschild zur Korrektur der Beschaltung einer Leiste auf der Kabeladerseite (KS) vorgesehen ist.

13. Anschluß-,Trenn-oder Schaltleiste nach Ansprüchen 1 bis 12, **dadurch gekennzeichnet, daß** die Leiste beliebig aufreihbar ist.

14. Verfahren zum Anschalten von Kabeladern an die Kontaktelemente (7,8) von einer Anschluß-, Trenn- oder Schaltleiste gemäß einem der Ansprüche 1-13,
**dadurch gekennzeichnet,**
**daß** die Leiste mittels erster Befestigungselemente in eine erste Beschaltungsposition (I) an der Haltevorrichtung, dann von dieser gelöst und durch Drehen um vorzugsweise 90° mittels zweiter Befestigungselemente in eine zweite Beschaltungsposition (II) gebracht wird.

## Claims

1. Terminal, isolating or connecting strip for telecommunications and data technology comprising two insulating bodies (3, 4) fitted with contact elements (7, 8) and having fastening elements (6) arranged on an insulating body for latching onto a retaining apparatus (9),
**characterized in that**
the two insulating bodies (3,4) are arranged at an angle with respect to one another and the contact elements (7,8) are formed over two planes and are introduced continuously into the insulating bodies (3, 4) in two planes, with the result that two rows of terminal strips (1,2) which are at an angle with respect to one another are formed, and in that further fastening elements (5) for latching onto the retaining apparatus (9) are arranged on the one insulating body.

2. Terminal, isolating or connecting strip according to Claim 1, **characterized in that** insulation-piercing terminal contact elements (7,8) are introduced into the two insulating bodies (3,4) which are arranged at an angle with respect to one another, which continuous or separable insulation-piercing terminal contact elements (7,8) are formed over two planes and which form two rows of terminal strips (1,2) which are at an angle with respect to one another, the one insulating body (4) having latching elements (5,6) for latching onto the retaining apparatus in two latching positions (I,II).

3. Terminal, isolating or connecting strip according to Claim 2, **characterized in that** the retaining apparatus (9) is formed by a mounting bracket or a profiled rail.

4. Terminal, isolating or connecting strip according to Claim 1, **characterized in that** the retaining apparatus (9) is formed by a flange to which the strip is screwed.

5. Terminal, isolating or connecting strip according to Claims 1 and 2, **characterized in that** the two insulating bodies (3,4) are connected to one another at an angle of preferably 90°.

6. Isolating or connecting strip according to Claims 1 to 5, **characterized in that** the insulation-piercing terminal contact elements (7) are formed from a U-shaped insulation-piercing terminal connecting contact (24) having a pick-off contact (25) and from an L-shaped insulation-piercing terminal connecting contact (26) having a further pick-off contact (27), the two pick-off contacts (25,27) forming a function pick-off (28).

7. Connecting strip according to Claims 1 to 5, **characterized in that** the insulation-piercing terminal contact elements (8) are formed integrally from a function pick-off (31) and from two insulation-piercing terminal connecting contacts (29,30) which are arranged at an angle of 90° with respect to one another.

8. Terminal, isolating or connecting strip according to Claim 3, **characterized by** a latch row (16) with latching openings (18) for latching the strip on the mounting bracket (9) in a wirin, position (I), and a latch row (17) with latching openings (19) for latching the strip on the mounting bracket (9) in a final position (II), the latching openings (18) for the wiring position (I) being arranged laterally offset between the latching openings (19) for the final position (II) of the strip.

9. Terminal, isolating or connecting strip according to Claim 3, **characterized in that** the mounting bracket (9) has an elongated hole (21) in its rear wall (20) for infinitely variable adjustment of the cable strands and/ or of the blocking plugs.

10. Terminal, isolating or connecting strip according to Claims 3, 8, 9, **characterized in that** the mounting bracket (9) is connected to an insertion recess (22) and to a protective dust cap (23) in order to prevent dirt on the contact elements (7,8).

11. Terminal, isolating or connecting strip according to Claims I to 10, **characterized in that** a frame which can be lead-sealed is provided in order to prevent manipulations on the cable core side (network side).

12. Terminal, isolating or connecting strip according to Claim 3, **characterized in that** a marking plate, which can be used as an adapter, is provided on the mounting bracket (9) in order to correct the wiring of a strip on the cable core side (KS).

13. Terminal, isolating or connecting strip according to Claims I to 12, **characterized in that** the strip can be arranged in rows as required.

14. Method for connecting cable cores to the contact elements (7,8) of a terminal, isolating or connecting strip according to one of Claims 1 to 13, **characterized in that** the strip is moved into a first wiring position (I) on the retaining apparatus by means of first fastening elements, is then released from the latter, and is moved into a second wiring position (II) by rotation through preferably 90° by means of second fastening elements.

## Revendications

1. Barre de raccordement, de sectionnement ou de commutation pour les techniques de télécommunication et de l'informatique, constituée de deux corps isolants (3,4) munis d'éléments de contact (7, 8) et avec des éléments de fixation (6) disposés sur un corps isolant pour l'encliquetage sur un dispositif de support (9),
**caractérisée en ce que**
les deux corps isolants (3, 4) forment un angle l'un avec l'autre et les éléments de contact (7, 8) sont formés sur deux plans et sont insérés de bout en bout dans les corps isolants (3, 4) dans deux plans, de sorte que deux rangées de barres à bornes (1, 2) formant un angle l'une avec l'autre soient formées, et en ce que d'autres éléments de fixation (5) sont disposés sur l'un des corps isolants pour l'encliquetage sur le dispositif de support (9).

2. Barre de raccordement, de sectionnement ou de commutation suivant la revendication 1, **caractérisée en ce que** sont insérés, dans les deux corps isolants (3, 4) formant un angle l'un avec l'autre, des éléments de contact autodénudants (7, 8) formés de bout en bout ou séparables sur deux plans qui forment deux rangées de barres à bornes (1, 2) formant un angle l'une avec l'autre, l'un des corps isolants (4) présentant des éléments d'encliquetage (5, 6) pour l'encliquetage sur le dispositif de support dans deux positions d'encliquetage (I, II).

3. Barre de raccordement, de sectionnement ou de commutation suivant la revendication 2, **caractérisée en ce que** le dispositif de support (9) est formé par un étrier de montage ou un rail profilé.

4. Barre de raccordement, de sectionnement ou de commutation suivant la revendication 1, **caractérisée en ce que** le dispositif de support (9) est formé par une bride sur laquelle la borne est vissée.

5. Barre de raccordement, de sectionnement ou de commutation suivant les revendications 1 et 2, **caractérisée en ce que** les deux corps isolants (3, 4) sont reliés entre eux suivant un angle de préférence de 90°.

6. Barre de sectionnement ou de commutation suivant les revendications 1 à 5, **caractérisée en ce que** l'élément de contact autodénudant (7) est formé d'un contact de raccordement autodénudant (24), en forme de U, comprenant un contact de prise (25), et d'un contact de raccordement autodénudant (26), en forme de L, comprenant un autre contact de prise (27), les deux contacts de prise (25, 27) formant une prise de fonction (28).

7. Barre de raccordement suivant les revendications 1 à 5, **caractérisée en ce que** l'élément de contact autodénudant (8) est réalisé d'une pièce à partir de deux contacts de raccordement autodénudants (29, 30) disposés suivant un angle de 90° l'un par rapport à l'autre, et d'une prise de fonction (31).

8. Barre de raccordement, de sectionnement ou de commutation suivant la revendication 3, **caractérisée par** une rangée d'encoches (16) avec ouvertures d'encliquetage (18) pour l'encliquetage de la barre sur l'étrier de montage (9) dans une position de câblage (I) et une rangée d'encoches (17) avec ouvertures d'encliquetage (19) pour l'encliquetage de la barre sur l'étrier de montage (9) dans une position finale (II), les ouvertures d'encliquetage (18) pour la position de câblage (I) étant disposées latéralement, en quinconce, entre les ouvertures d'encliquetage (19) pour la position finale (II) de la barre.

9. Barre de raccordement, de sectionnement ou de commutation suivant la revendication 3, **caractérisée en ce que** l'étrier de montage (9) présente dans sa paroi arrière (20) un trou oblong (21) pour l'ajustage continu des faisceaux de câbles ou des garnitures de blocage.

10. Barre de raccordement, de sectionnement ou de commutation suivant les revendications 3, 8, 9, **caractérisée en ce que** l'étrier de montage (9) est assemblé avec une auge d'insertion (22) et un capot antipoussière (23) pour empêcher que les éléments de contact (7, 8) ne soient souillés.

11. Barre de raccordement, de sectionnement ou de commutation suivant les revendications 1 à 10, **caractérisée en ce qu'**un châssis plombable est prévu pour empêcher les manipulations du côté conducteurs de câbles (côté réseau).

12. Barre de raccordement, de sectionnement ou de commutation suivant la revendication 3, **caractérisée en ce que**, sur l'étrier de montage (9), une étiquette d'identification utilisable comme adaptateur est prévue pour corriger le câblage d'une barre du côté conducteurs de câbles (KS).

13. Barre de raccordement, de sectionnement ou de commutation suivant les revendications 1 à 12, **caractérisée en ce que** la barre peut être disposée en rang de n'importe quelle manière.

14. Procédé pour brancher des conducteurs de câbles aux éléments de contact (7, 8) d'une barre de raccordement, de sectionnement ou de commutation selon l'une quelconque des revendications 1 à 13, **caractérisé en ce que** la barre est amenée, par l'intermédiaire de premiers éléments de fixation, dans une première position de câblage (I) contre le dispositif de support, puis détachée de celui-ci et, par pivotement, de préférence de 90°, par l'intermédiaire de deuxièmes éléments de fixation, dans une deuxième position de câblage (II).
